# EUROPEAN PATENT APPLICATION

(11) **EP 4 170 925 A1**
(43) Date of publication of application: **26.04.2023**
(21) Application number: 21824958.9
(22) Date of filing: 20.04.2021
(51) Int. Cl.: H04B 7/14, H04W 36/08

(54) **COMMUNICATION METHOD AND APPARATUS**

(30) Priority: 19.06.2020 CN 202010568440
(71) Applicant: Spreadtrum Communications (Shanghai) Co., Ltd., Shanghai 201203 (CN)
(72) Inventor: LIU, Xing, Shanghai 201203 (CN)
(74) Representative: Pfenning, Meinig & Partner mbB
(86) International application number: PCT/CN2021/088516
(87) International publication number: WO 2021/253968

(57) **Abstract**

Embodiments of the present application provide a communication method and an apparatus. The method includes: performing, by a relay device, handover from a first cell to a second cell and establishing a connection with the second cell, where the relay device maintains a connected state with the first cell before the connection with the second cell is established successfully; sending, by the relay device, indication information to a terminal device, where the indication information is used to indicate that the relay device establishes the connection with the second cell. The solution of the embodiments of the present application enables the terminal device to learn the completion status of cell handover of the relay device, thereby enabling the terminal device to interact with the second cell after the handover through the relay device.

## Description

This application claims priority to Chinese Patent Application No. 202010568440.2, filed to the China National Intellectual Property Administration on June 19, 2020 and entitled "COMMUNICATION METHOD AND APPARATUS", which is hereby incorporated by reference in its entirety.

### TECHNICAL FIELD

Embodiments of the present application relate to the field of communication technology and, in particular, to a communication method and an apparatus.

### BACKGROUND

In a wireless communication system, in order to expand transmission coverage, a relay device may be introduced between a terminal and a base station. The relay device can forward data from the terminal to the base station and forward data from the base station to the terminal.

Since the relay device is mobile, when a connection between the relay device and the terminal remains unchanged and relative movement occurs between the relay device and the base station, group handover will occur between the relay device and the base station, that is, both the relay device and the terminal need to perform handover from one base station to another, while a connection relationship between the relay device and the terminal remains unchanged. At present, when the relay device needs to perform handover of the connected base station due to the movement, the relay device usually disconnects from a source base station first, and then establishes a connection with a target base station, which will result in a period of service transmission interruption. To solve this problem, a current solution is that the relay device may not first disconnect from the source base station and meanwhile may initiate a connection to the target base station, and disconnection from the source base station will not be performed until the connection with the target base station is established.

The above solution can avoid the problem of service transmission interruption, but since the handover process is completed by the relay device, the terminal is unable to learn when the relay device performs the handover to the target base station.

### SUMMARY

Embodiments of the present application provide a communication method and an apparatus to overcome a problem that a terminal device is unable to learn when a relay device performs cell handover in a process of group handover.

In a first aspect, an embodiment of the present application provides a communication method, including:
performing, by a relay device, handover from a first cell to a second cell and establishing a connection with the second cell; where the relay device maintains a connected state with the first cell before the connection with the second cell is established successfully;
sending, by the relay device, indication information to a terminal device, where the indication information is used to indicate that the relay device establishes the connection with the second cell.

In a possible implementation, performing, by the relay device, the handover from the first cell to the second cell and establishing the connection with the second cell includes:
receiving, by the relay device, a handover command from the first cell;
performing, by the relay device, the handover from the first cell to the second cell based on the handover command and establishing the connection with the second cell.

In a possible implementation, the handover command includes an identifier of the second cell.

In a possible implementation, the handover command includes configuration information of the second cell.

In a possible implementation, before performing, by the relay device, the handover from the first cell to the second cell based on the handover command and establishing the connection with the second cell, the method further includes:
sending, by the relay device, the handover command to the terminal device;
receiving, by the relay device, a response to the handover command from the terminal device.

In a possible implementation, the method further includes:
receiving, by the relay device, first data from the terminal device and sending the first data to the second cell.

In a possible implementation, receiving, by the relay device, the first data from the terminal device and sending the first data to the second cell includes:
after the relay device sends the indication information to the terminal device, receiving, by the relay device, the first data from the terminal device and sending the first data to the second cell.

In a possible implementation, receiving, by the relay device, the first data from the terminal device and sending the first data to the second cell includes:
receiving, by the relay device, the first data from the terminal device after the relay device receives the handover command from the first cell;
sending, by the relay device, the first data to the second cell after the relay device establishes the connection with the second cell.

In a possible implementation, before the relay device establishes the connection with the second cell, the method further includes:
receiving, by the relay device, second data from the terminal device and sending the second data to the first cell.

In a second aspect, an embodiment of the present application provides a communication method, including:
receiving, by a terminal device, indication information from a relay device, where the indication information is used to indicate that the relay device performs handover from a first cell to a second cell and establishes a connection with the second cell;
stopping, by the terminal device based on the indication information, sending second data to the first cell through the relay device.

In a possible implementation, the method further includes:
sending, by the terminal device, first data to the second cell through the relay device.

In a possible implementation, before receiving, by the terminal device, the indication information from the relay device, the method further includes:
receiving, by the terminal device, a handover command from the relay device;
sending, by the terminal device, a response to the handover command to the relay device.

In a possible implementation, the handover command includes an identifier of the second cell.

In a possible implementation, the handover command includes configuration information of the second cell.

In a possible implementation, sending, by the terminal device, the first data to the second cell through the relay device includes:
sending, by the terminal device, the first data to the relay device after receiving the indication information from the relay device.

In a possible implementation, sending, by the terminal device, the first data to the second cell through the relay device includes:
sending, by the terminal device, the first data to the relay device after receiving the handover command from the relay device.

In a third aspect, an embodiment of the present application provides a communication apparatus, including:
a handover module, configured to perform handover from a first cell to a second cell and establish a connection with the second cell; where a relay device maintains a connected state with the first cell before the connection with the second cell is established successfully;
a sending module, configured to send indication information to a terminal device, where the indication information is used to indicate that the relay device establishes the connection with the second cell.

In a possible implementation, the handover module is specifically configured to:
receive a handover command from the first cell;
perform the handover from the first cell to the second cell based on the handover command and establish the connection with the second cell.

In a possible implementation, the handover command includes an identifier of the second cell.

In a possible implementation, the handover command includes configuration information of the second cell.

In a possible implementation, the handover module is further configured to, before performing the handover from the first cell to the second cell based on the handover command and establishing the connection with the second cell:
send the handover command to the terminal device;
receive a response to the handover command from the terminal device.

In a possible implementation, the sending module is further configured to:
receive first data from the terminal device and send the first data to the second cell.

In a possible implementation, the sending module is specifically further configured to:
after the relay device sends the indication information to the terminal device, receive the first data from the terminal device and send the first data to the second cell.

In a possible implementation, the sending module is specifically further configured to:
receive the first data from the terminal device after the relay device receives the handover command from the first cell;
send the first data to the second cell after the relay device establishes the connection with the second cell.

In a possible implementation, the sending module is further configured to:
receive second data from the terminal device and send the second data to the first cell.

In a fourth aspect, an embodiment of the present application provides a communication apparatus, including:
a receiving module, configured to receive indication information from a relay device, where the indication information is used to indicate that the relay device performs handover from a first cell to a second cell and establishes a connection with the second cell;
a processing module, configured to stop, based on the indication information, sending second data to the first cell through the relay device.

In a possible implementation, a sending module is further included, and the sending module is configured to:
send first data to the second cell through the relay device.

In a possible implementation, before receiving the indication information from the relay device, the receiving module is further configured to:
receive a handover command from the relay device;
send a response to the handover command to the relay device.

In a possible implementation, the handover command includes an identifier of the second cell.

In a possible implementation, the handover command includes configuration information of the second cell.

In a possible implementation, the sending module is specifically configured to:
send the first data to the relay device after receiving the indication information from the relay device.

In a possible implementation, the sending module is specifically configured to:
send the first data to the relay device after receiving the handover command from the relay device.

In a fifth aspect, an embodiment of the present disclosure provides a relay device, including: at least one processor and a memory;
where the memory stores computer-execution instructions;
the at least one processor executes the computer-execution instructions stored in the memory to cause the at least one processor to implement the communication method according to any one of the first aspect.

In a sixth aspect, an embodiment of the present disclosure provides a terminal device, including: at least one processor and a memory;
where the memory stores computer-execution instructions;
the at least one processor executes the computer-execution instructions stored in the memory to cause the at least one processor to implement the communication method according to any one of the second aspect.

In a seventh aspect, an embodiment of the present disclosure provides a computer-readable storage medium, where the computer-readable storage medium stores computer-execution instructions, and the communication method according to any one of the first aspect or the second aspect is implemented when a processor executes the computer-execution instructions.

In an eighth aspect, an embodiment of the present disclosure provides a computer program product including a computer program, where the communication method according to any one of the first aspect and the second aspect is implemented when the computer program is executed by a processor.

According to the communication method and apparatus provided by the embodiments of the present application, first, the relay device performs handover from the first cell to the second cell and establishes the connection with the second cell. The relay device maintains the connected state with the first cell before the connection with the second cell is established successfully, thereby avoiding an interruption of service. After the relay device establishes the connection with the second cell, the relay device sends the indication information to the terminal device, and the terminal device can learn from the indication information that the relay device has performed the handover from the first cell to the second cell and has established the connection with the second cell. The solution of the embodiments of the present application enables the terminal device to learn the completion status of cell handover of the relay device, thereby enabling the terminal device to interact with the second cell after the handover through the relay device.

### BRIEF DESCRIPTION OF DRAWINGS

In order to explain technical solutions of embodiments of the present application or in the prior art more clearly, the accompanying drawings that need to be used in the description of the embodiments or the prior art will be briefly introduced in the following. Obviously, the drawings in the following description are some embodiments of the present disclosure, and for those of ordinary skilled in the art, other drawings can also be obtained according to these drawings without paying creative effort.
FIG. 1 is a schematic diagram of an uplink, a downlink and a sidelink provided by an embodiment of the present application.
FIG. 2 is a schematic diagram of a link connection of a relay provided by an embodiment of the present application.
FIG. 3 is a schematic diagram of group handover provided by an embodiment of the present application.
FIG. 4 is a schematic diagram of group handover of a relay device provided by the prior art.
FIG. 5 is a signaling diagram of a communication method provided by an embodiment of the present application.
FIG. 6 is signaling diagram I of a communication method provided by an embodiment of the present application.
FIG. 7 is signaling diagram II of a communication method provided by an embodiment of the present application.
FIG. 8 is a schematic flow diagram of a communication method provided by another embodiment of the present application.
FIG. 9 is a schematic structural diagram of a communication apparatus provided by an embodiment of the present application.
FIG. 10 is a schematic structural diagram of a communication apparatus provided by an embodiment of the present application.
FIG. 11 is a schematic diagram of a hardware structure of a relay device provided by an embodiment of the present application.
FIG. 12 is a schematic diagram of a hardware structure of a terminal device provided by an embodiment of the present application.

### DESCRIPTION OF EMBODIMENTS

In order to make the objections, technical solutions and advantages of embodiments of the present application clearer, the technical solutions in the embodiments of the present application will be described clearly and comprehensively with reference to the drawings in the embodiments of the present application. Obviously, the described embodiments are part of the embodiments of the present application, rather than all of them. Based on the embodiments in the present application, all other embodiments obtained by those of ordinary skilled in the art without creative effort belong to the protection scope of the present application.

To facilitate understanding, first of all, the concepts involved in the present application are explained.

Terminal device: usually having a wireless transceiving function. A terminal device may be deployed on land, including indoor or outdoor, handheld, wearable or vehicle-mounted; may also be deployed on water surface (for example, on a ship, etc.); may also be deployed in air (for example, on an airplane, a balloon, and a satellite, etc.). The terminal device may be a mobile phone (mobile phone), a tablet computer (Pad), a computer having a wireless transceiving function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a remote medical (remote medical) wireless terminal device, a wireless terminal device in a smart grid (smart grid), a wireless terminal device in transportation safety (transportation safety), a wireless terminal device in a smart city (smart city), a wireless terminal device in a smart home, a wearable terminal device, etc. The terminal device involved in the embodiments of the present application may also be referred to as a terminal, user equipment (user equipment, UE), an access terminal device, a vehicle-mounted terminal, an industrial control terminal, a UE unit, a UE station, a mobile station, a mobile radio station, a remote station, a remote terminal device, a mobile device, a UE terminal device, a wireless communication device, a UE agent, or a UE apparatus, etc. The terminal device may also be fixed or mobile.

Relay device: also being referred to as a relay (relay), and being a transmission channel between two switching centers. In the present application, in order to expand transmission coverage, a relay device can be introduced between a sending end and a receiving end. The relay device can forward received data to the receiving end, thus expanding the sending coverage of the sending end.

For example, in a cellular system, a relay device may be introduced between a base station and a terminal device. The relay device is responsible for forwarding data of the terminal device to the base station, or forwarding data of the base station to the terminal device.

Sidelink (Sidelink, SL) communication technology, also referred to as object-to-object direct communication technology, is a communication technology that is not quite the same as ordinary wireless cellular network communication. In a traditional cellular network, a terminal device communicates with a network device, at which time a link between the terminal device and the network device is called an uplink (Uplink) or a downlink (Downlink), and an interface is called a Uu interface. In object-to-object direct communication, a terminal device communicates with a terminal device directly. A link between the terminal devices is called a direct link, and an interface is called a PC5 interface. A sidelink may also be called a direct link.

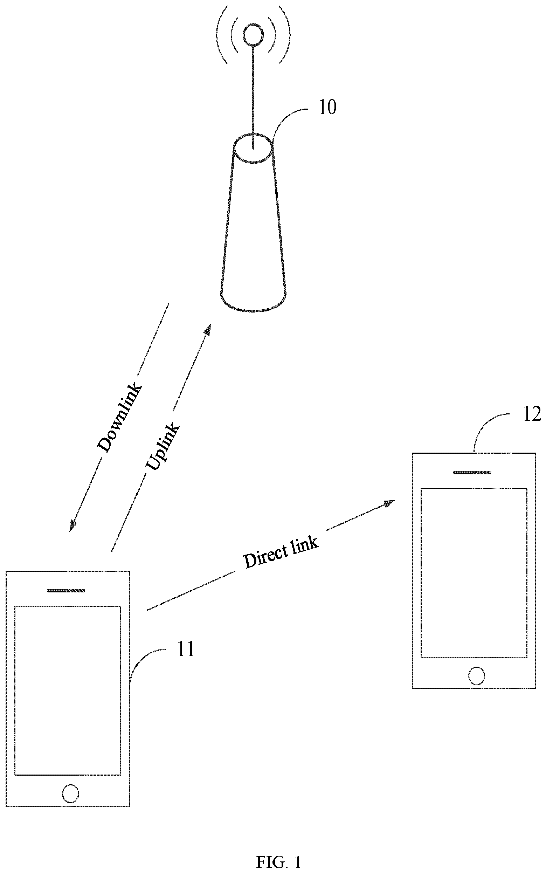

FIG. 1 is a schematic diagram of an uplink, a downlink and a sidelink provided by an embodiment of the present application. As shown in FIG. 1, a base station 10, a terminal 11 and a terminal 12 are included. An uplink and a downlink exist between the base station 10 and the terminal 11. The base station 10 can send downlink data to the terminal 11 through the downlink, and the terminal 11 can send uplink data to the base station 10 through the uplink.

Between the terminal 11 and the terminal 12 exists a direct link through which the terminal 11 can send data to the terminal 12 and the terminal 12 can also send data to the terminal 11.

The sidelink was initially introduced to realize that terminal devices closer to each other can communicate directly, and data does not need to be forwarded through a base station, thereby reducing transmission delay. Later, based on the introduction of the sidelink, a sidelink relay (sidelink relay) was designed. The previous relay uses the technology of the uplink and the downlink for communication between the relay and the terminal device, while the sidelink relay uses the sidelink technology for the link between the relay device and the terminal device.

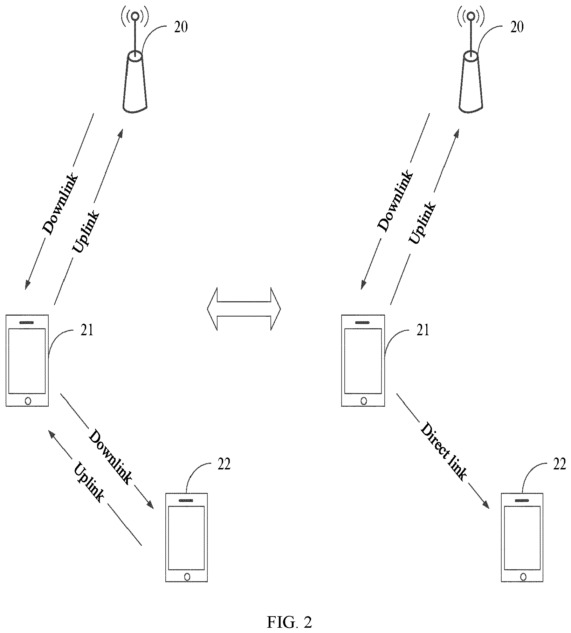

FIG. 2 is a schematic diagram of a link connection of a relay provided by an embodiment of the present application. As shown in FIG. 2, a base station 20, a relay device 21 and a terminal device 22 are included.

The technology of the uplink and the downlink is used for communication between the relay device 21 and the base station 20. The base station 20 can send downlink data to the relay device 21 through the downlink, and the relay device 21 can send uplink data to the base station 20 through the uplink.

On the left part of FIG. 2, the technology of the uplink and the downlink is also used for communication between the relay device 21 and the terminal device 22. The relay device 21 can send downlink data sent by the base station 20 to the terminal device 22 through the downlink. The terminal device 22 can send uplink data to the relay device 22 through the uplink and the relay device 22 forwards the data to the base station 20.

On the right part of FIG. 2, the technology of the direct link is used for communication between the relay device 21 and the terminal device 22, and data transmission is carried out directly.

In a wireless communication system, when a base station is directly connected with a terminal device, since the terminal device is mobile, the terminal device may move from a coverage area of one base station to a coverage area of another base station, at which point the terminal device needs to perform handover. Similarly, for a relay device, the relay device is also mobile. When a connection between the relay device and the terminal device remains unchanged, but movement occurs between the relay device and a base station or cell, a phenomenon known as group handover (group handover) occurs. That is, both the relay device and the terminal device perform handover from one base station to another, or both the relay device and the terminal device perform handover from one cell to another, while the connected relationship between the relay device and the terminal device remains unchanged.

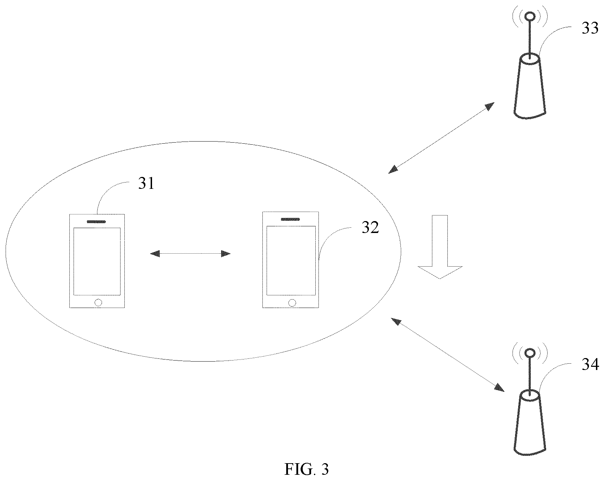

FIG. 3 is a schematic diagram of group handover provided by an embodiment of the present application. As shown in FIG. 3, a terminal device 31, a relay device 32, a base station 33 and a base station 34 are included. The connection between the terminal device 31 and the relay device 32 remains unchanged. When the terminal device 31 and the relay device 32 move, handover from the base station 33 to the base station 34 occurs, i.e. group handover occurs.

In a communication system including only a base station and a terminal device, a source base station sends a handover command to the terminal device when handover is required. When handover occurs due to movement of the terminal device, the terminal device will first disconnect from the source base station and then establishes a connection with a target base station. After the terminal device has disconnected from the source base station and before the connection with the target base station is established, there will be a period of service transmission interruption. Therefore, during the 5G research, a new mechanism was introduced. That is, the terminal device does not first disconnect from the source base station and meanwhile initiates a connection establishment process with the target base station. Until the connection establishment with the target base station is completed (e.g. a random access process is completed), the terminal device will start to deliver data to the target base station and stop delivering data to the source base station. This kind of handover is called Dual Active Protocol Stack (Dual Active Protocol Stack, DAPS) handover.

Similarly, in the group handover of the relay device, the same DAPS handover mode can be used when the relay device and terminal device perform handover from a first cell to a second cell together. The relay device does not first disconnect from the first cell and meanwhile initiates a connection establishment process with the second cell until the connection establishment with the second cell is completed (e.g. a random access process is completed).

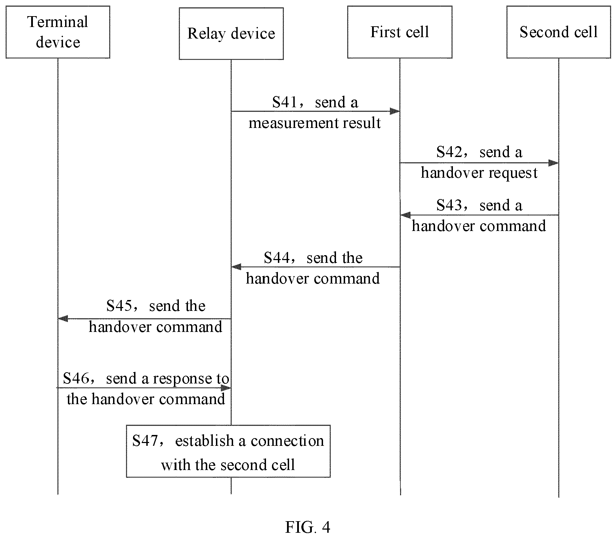

FIG. 4 is a schematic diagram of group handover of a relay device provided in the prior art. As shown in FIG. 4, the following steps are included.

S41, a relay device sends a measurement result to a first cell.

S42, the first cell sends a handover request to a second cell.

S43, the second cell sends a handover command to the first cell.

The second cell will send the handover command to the first cell after allowing the relay device to perform handover to the second cell.

S44, the first cell sends the handover command to the relay device.

S45, the relay device sends the handover command to the terminal device.

S46, the terminal device sends a response to the handover command to the relay device.

S47, the relay device establishes a connection with the second cell.

For example, the connection with the second cell can be established through random access.

In the current group handover process, since the random access process is completed at the relay device, and the conversion of uplink data delivery is performed at the terminal device, the terminal device cannot perform subsequent operations after the random access is successfully completed because the terminal device does not know the completion status of the random access of the relay device (for example, the terminal device needs to determine whether packaging and sending operations can be performed on data based on a configuration of the second cell to deliver the data to a protocol entity corresponding to the second cell). Accordingly, an embodiment of the present application provides a solution that enables the terminal device to learn the completion status of the random access of the relay device. This will be described below.

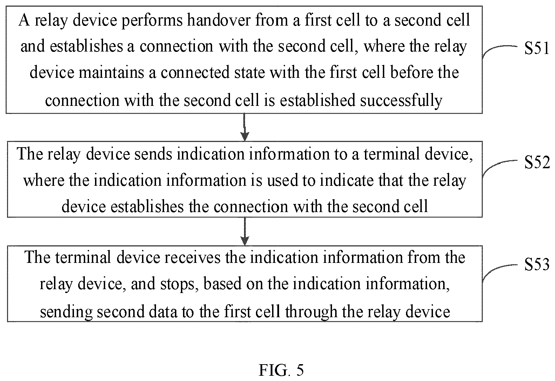

FIG. 5 is a signaling diagram of a communication method provided by an embodiment of the present application. As shown in FIG.5, the method can include the following steps.

S51, a relay device performs handover from a first cell to a second cell and establishes a connection with the second cell, where the relay device maintains a connected state with the first cell before the connection with the second cell is established successfully.

In the embodiment of the present application, the relay device is initially connected to the first cell, and data transmission can be performed between a terminal device and the first cell through the relay device. The relay device and the terminal device are kept within a certain distance from each other so that the connection between the relay device and the terminal device can be maintained without handover.

After the terminal device and the relay device move, cell handover may be required. For example, when the terminal device and the relay device have moved out of the coverage area of the first cell, the terminal device and the relay device need to perform handover to another cell, i.e. the second cell. At this time, a connection relationship between the terminal device and the relay device remains unchanged, and both the relay device and the terminal device need to perform the handover from the first cell to the second cell, i.e., to perform group handover.

In order to avoid service transmission interruption during cell handover, in the embodiment of the present application, the relay device maintains the connected state with the first cell in the process of performing handover from the first cell to the second cell by the relay device. After the relay device has successfully established the connection with the second cell, the relay device can disconnect from the first cell.

S52, the relay device sends indication information to a terminal device, where the indication information is used to indicate that the relay device establishes the connection with the second cell.

After the relay device performs the handover from the first cell to the second cell and establishes the connection with the second cell, since the process of performing the cell handover is completed at the relay device side at this time, the terminal device is not yet informed that the relay device has performed the cell handover. However, data interaction between the terminal device and the cell needs to be completed through the terminal device, resulting in that the terminal device still sends data to the first cell through the relay device after the relay device has established the connection with the second cell and disconnected from the first cell.

Therefore, after the relay device has performed the handover to the second cell, the relay device may send the indication information to the terminal device, to indicate that the relay device has performed the handover from the first cell to the second cell and has established the connection with the second cell.

S53, the terminal device receives the indication information from the relay device, and stops, based on the indication information, sending second data to the first cell through the relay device.

After receiving the indication information from the relay device, the terminal device can learn from the indication information that the relay device has performed the handover from the first cell to the second cell. Therefore, the terminal device can stop sending the second data to the first cell through the relay device. For example, the terminal device may stop sending protocol entity delivery data corresponding to the first cell to the relay device. Optionally, the terminal device may send first data to the second cell through the relay device.

According to the communication method provided by the embodiment of the present application, first, the relay device performs handover from the first cell to the second cell and establishes the connection with the second cell. The relay device maintains the connected state with the first cell before the connection with the second cell is established successfully, thereby avoiding an interruption of service. After the relay device establishes the connection with the second cell, the relay device sends the indication information to the terminal device, and the terminal device can learn from the indication information that the relay device has performed the handover from the first cell to the second cell and has established the connection with the second cell. The solution of the embodiment of the present application enables the terminal device to learn the completion status of the cell handover of the relay device, thereby enabling the terminal device to interact with the second cell after the handover through the relay device.

The solution of the present application will be described in detail below in conjunction with the accompanying drawings.

When the relay device and the terminal device need to perform cell handover due to a change in location or other reasons, the relay device needs to receive a handover command from the first cell. When the relay device needs to perform the handover from the first cell to the second cell, the first cell sends a handover request to the second cell. If the second cell allows the handover of the relay device, the second cell will send a handover command to the first cell, and the first cell will send the handover command to the relay device.

Optionally, the handover command includes an identifier of the second cell. After receiving the handover command, the relay device can learn from the identifier of the second cell included in the handover command that handover from the first cell to the second cell is required.

Optionally, before the relay device establishes the connection with the second cell, the relay device will also send the handover command to the terminal device. After the terminal device receives the handover command, the terminal device can learn that the relay device is handed over to the second cell after the cell handover. After receiving the handover command, the terminal device can send a response to the handover command to the relay device, and the relay device can try to start to establish a connection with the second cell after receiving the response to the handover command.

Optionally, before the relay device establishes the connection with the second cell, the terminal device can also communicate with the first cell through the relay device since the relay device and the first cell still maintains the connected state. For example, the terminal device may send second data for the first cell to the relay device. After receiving the second data, the relay device sends the second data to the first cell. For example, the second data may be protocol entity delivery data corresponding to the first cell. The terminal device may send the corresponding protocol entity delivery data to the first cell based on configuration information of the first cell.

Optionally, the handover command may also include configuration information of the second cell. After receiving the handover command, the terminal device may acquire the configuration information of the second cell included in the handover command. After acquiring the configuration information of the second cell, the terminal device may send first data for the second cell to the relay device based on the configuration information of the second cell. After establishing the connection with the second cell, the relay device may send the first data to the second cell. For example, the first data may be protocol entity delivery data corresponding to the second cell. The terminal device may send the corresponding protocol entity delivery data to the second cell based on the configuration information of the second cell.

In the above process, by receiving the handover command, the terminal device learns that the relay device will perform the handover from the first cell to the second cell subsequently. However, the terminal device does not know when the handover of the relay device is completed. In this case, the terminal device may think that the relay device has not completed the handover, and will thus keep trying to interact with the first cell through the relay device. However, after the cell handover of the relay device is completed, the relay device disconnects from the first cell and establishes the connection with the second cell, at which time the relay device cannot send the second data for the first cell to the first cell, resulting in a waste of resources.

Based on this, in the embodiments of the present application, after the relay device establishes the connection with the second cell, the relay device will send the indication information to the terminal device to inform the terminal device that the cell handover of the relay device has been completed and the connection with the second cell has been established successfully.

After the relay device establishes the connection with the second cell, the terminal device may communicate with the second cell through the relay device.

Optionally, the terminal device may send the first data for the second cell to the relay device after receiving the indication information. After receiving the first data, the relay device forwards the first data to the second cell.

Optionally, the terminal device may also send the first data for the second cell to the relay device right after receiving the handover command. After receiving the first data, the relay device waits to establish the connection with the second cell before forwarding the first data to the second cell.

The solution of the present application will be described in detail below in conjunction with the accompanying drawings.

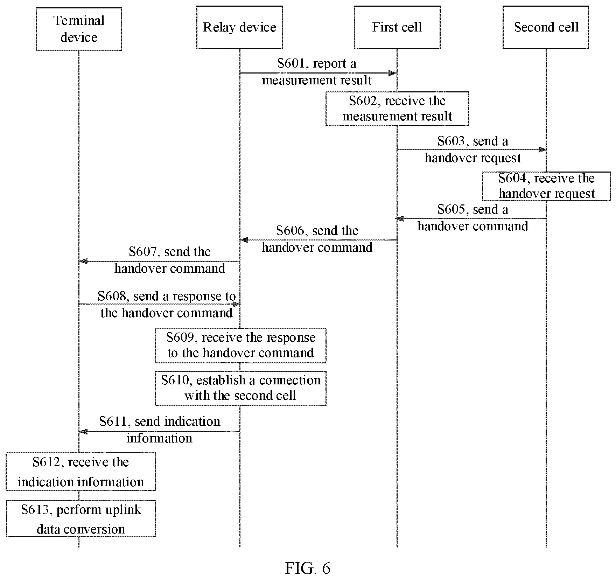

FIG. 6 is signaling diagram I of a communication method provided by an embodiment of the present application. As shown in FIG.6, the following steps are included.

S601, a relay device reports a measurement result to a first cell.

The relay device can acquire measurement results of one or more nearby cells and report them to the first cell.

S602, the first cell receives the measurement result.

After the relay device reports the measurement result to the first cell, the first cell receives the measurement result and determines a cell to hand over to (i.e., a second cell) based on the received measurement result.

S603, the first cell sends a handover request to a second cell.

After determining that the relay device performs handover from the first cell to the second cell, the first cell will send a handover request to the second cell to inform the second cell that the relay device will perform the handover from the first cell to the second cell.

S604, the second cell receives the handover request.

The second cell can receive the handover request. After receiving the handover request, the second cell can determine whether to allow the relay device to perform the handover to the second cell based on actual signal quality of the second cell, a connected terminal, and other conditions.

S605, the second cell sends a handover command to the first cell.

S606, the first cell sends the handover command to the relay device.

S607, the relay device sends the handover command to the terminal device.

When the second cell allows the relay device to perform the handover to the second cell, the second cell will send a handover command to the first cell. The first cell sends the handover command to the relay device, and the relay device will also send the handover command to the terminal device.

After receiving the handover command, the terminal device can learn that the relay device is about to perform cell handover from the first cell to the second cell.

S608, the terminal device sends a response to the handover command to the relay device.

S609, the relay device receives the response to the handover command.

S610, the relay device establishes a connection with the second cell.

After receiving the response to the handover command, the relay device starts to try to establish a connection with the second cell. For example, the connection can be established through a random access process. Before the relay device establishes the connection with the second cell successfully, the relay device maintains the connection with the first cell.

S611, the relay device sends indication information to the terminal device.

After the relay device is connected to the second cell successfully, the relay device sends the indication information to the terminal device, to indicate that the relay device has performed the handover from the first cell to the second cell, that is, the relay device notifies the terminal device of the timing of the completion of the cell handover.

S612, the terminal device receives the indication information.

After receiving the indication information, the terminal device learns that the relay device has established the connection with the second cell and can stop interacting with the first cell.

S613, the terminal device performs uplink data conversion and sends first data to the second cell through the relay device.

After receiving the indication information, the terminal device can send the first data to the second cell through the relay device to interact with the second cell, and can also receive data sent by the second cell through the relay device, and so on. For example, a PDCP layer of the terminal device can deliver data to an RLC entity of the second cell through the relay device.

In the example of FIG. 6, before the connection with the second cell is established, since the relay device does not disconnect from the first cell, the terminal device can keep sending data that is to be forwarded to the first cell to the relay device, that is, the PDCP layer of the terminal device delivers the data to an RLC entity corresponding to the first cell. After the relay device completes the random access process and establishes the connection with the second cell, the terminal device can send data that needs to be forwarded to the second cell to the relay device, that is, the PDCP layer of the terminal device starts to deliver the data to the RLC entity corresponding to the second cell and stops delivering data to the RLC entity corresponding to the first cell. The above process is also referred to as uplink data conversion.

With the indication information sent by the relay device to the terminal device in the above embodiment, it is indicated that the terminal device can perform the uplink data conversion, so that the terminal device knows the timing of the completion of the cell handover in time.

In the example of FIG. 6, before the relay device establishes the connection with the second cell, the terminal device sends only second data for the first cell to the relay device. After the connection between the relay device and the second cell is established, the terminal device is informed via the indication information. Although the relay device has established the connection with the second cell at this time, there is a certain time delay, because data for the second cell is not cached in the relay device, and the relay device can only wait for the terminal device for a certain period of time and then receive the first data for the second cell from the terminal device.

To solve this problem, in the embodiments of the present application, after the relay device sends the handover command to the terminal device, the terminal device can send the first data for the second cell to the relay device based on configuration information of the second cell included in the handover command. When the relay device has not yet established the connection with the second cell, the relay device can cache the first data, and send the first data to the second cell directly after establishing the connection with the second cell, without waiting.

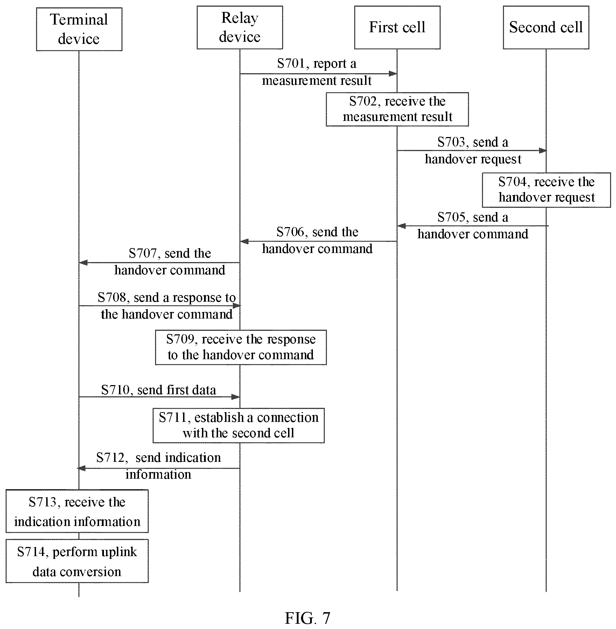

The solution will be explained below with reference to FIG. 7.

FIG. 7 is signaling diagram II of a communication method provided by an embodiment of the present application. As shown in FIG.6, the following steps are included.

S701, a relay device reports a measurement result to a first cell.

The relay device can acquire measurement results of one or more nearby cells and report them to the first cell.

S702, the first cell receives the measurement result.

After the relay device reports the measurement result to the first cell, the first cell receives the measurement result and determines a cell to hand over to (i.e., a second cell) based on the received measurement result.

S703, the first cell receives a handover request to a second cell.

After determining that the relay device performs handover from the first cell to the second cell, the first cell will send a handover request to the second cell to inform the second cell that the relay device will perform the handover from the first cell to the second cell.

S704, the second cell receives the handover request.

The second cell can receive the handover request. After receiving the handover request, the second cell can determine whether to allow the relay device to perform the handover to the second cell based on actual signal quality of the second cell, a connected terminal, and other conditions.

S705, the second cell sends a handover command to the first cell.

S706, the first cell sends the handover command to the relay device.

S707, the relay device sends the handover command to the terminal device.

When the second cell allows the relay device to perform the handover to the second cell, the second cell will send a handover command to the first cell. The first cell sends the handover command to the relay device, and the relay device will also send the handover command to the terminal device.

After receiving the handover command, the terminal device can learn that the relay device is about to perform cell handover from the first cell to the second cell.

S708, the terminal device sends a response to the handover command to the relay device.

S709, the relay device receives the response to the handover command.

S710, the terminal device sends first data to the relay device.

After receiving the handover command, the terminal can learn from an identifier of the second cell in the handover command that the relay device will perform handover to the second cell, and can send the first data to the relay device based on configuration information of the second cell. The relay device can receive the first data. Although the relay device cannot send the first data to the second cell before establishing a connection with the second cell, the relay device can cache the first data and transmit the first data to the second cell after the relay device establishes the connection with the second cell.

S711, the relay device establishes a connection with the second cell.

After receiving the response to the handover command, the relay device starts to try to establish a connection with the second cell. For example, the connection can be established through a random access process. Before the relay device establishes the connection with the second cell successfully, the relay device maintains the connection with the first cell.

S712, the relay device sends indication information to the terminal device.

After the relay device is connected to the second cell successfully, the relay device sends the indication information to the terminal device, to indicate that the relay device has performed the handover from the first cell to the second cell, that is, the relay device notifies the terminal device of the timing of the completion of the cell handover.

S713, the terminal device receives the indication information.

After receiving the indication information, the terminal device learns that the relay device has established the connection with the second cell and can stop interacting with the first cell.

S714, the terminal device performs uplink data conversion and sends first data to the second cell through the relay device.

After receiving the indication information, the terminal device can send the first data to the second cell through the relay device to interact with the second cell, and can also receive data sent by the second cell through the relay device, and so on. For example, a PDCP layer of the terminal device can deliver data to an RLC entity of the second cell through the relay device.

In the example of FIG 7, the terminal device starts to send data for the second cell immediately after receiving the handover command. But since the connection with the first cell is not interrupted at this time, the terminal device still needs to send the second data for the first cell. When the second data is successfully received at the first cell, sending to the second cell can be terminated; otherwise, air interface resources will be wasted. Therefore, the terminal device can inform the relay device which data may be eliminated from further transmission based on successful transmission status at the first cell.

After the relay device finally establishes the connection with the second cell, the terminal device may only keep a data transmission part to the second cell and stop a data transmission part to the first cell. The terminal device is allowed to send the first data for the second cell in advance, so that the relay device can send the first data to the second cell in a targeted manner immediately after the random access is successful, thereby reducing the time delay.

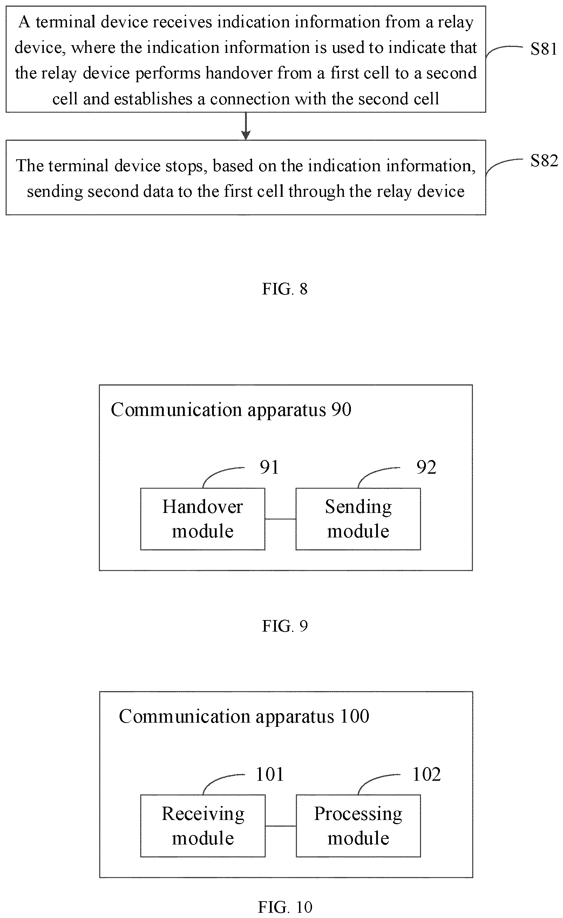

FIG. 8 is a schematic flow diagram of a communication method provided by another embodiment of the present application. As shown in FIG.8, the method can include the following steps.

S81, a terminal device receives indication information from a relay device, where the indication information is used to indicate that the relay device performs handover from a first cell to a second cell and establishes a connection with the second cell.

S82, the terminal device stops, based on the indication information, sending second data to the first cell through the relay device.

In a possible implementation, the method further includes that:
the terminal device sends first data to the second cell through the relay device.

In a possible implementation, before the terminal device receives the indication information from the relay device, the method further includes that:
the terminal device receives a handover command from the relay device;
the terminal device sends a response to the handover command to the relay device.

In a possible implementation, the handover command includes an identifier of the second cell.

In a possible implementation, the handover command includes configuration information of the second cell.

In a possible implementation, that the terminal device sends the first data to the second cell through the relay device includes that:
the terminal device sends the first data to the relay device after receiving the indication information from the relay device.

In a possible implementation, that the terminal device sends the first data to the second cell through the relay device includes that:
the terminal device sends the first data to the relay device after receiving the handover command from the relay device.

The solution of the embodiment shown in FIG. 8 is the method of the terminal device side corresponding to the solutions shown in FIG. 6-FIG. 7. The steps and principles thereof have been introduced in the above embodiments. The specific implementation can be found in the above embodiments, and will not be repeated here.

According to the communication method provided by the embodiment of the present application, first, the relay device performs handover from the first cell to the second cell and establishes the connection with the second cell. The relay device maintains the connected state with the first cell before the connection with the second cell is established successfully, thereby avoiding an interruption of service. After the relay device establishes the connection with the second cell, the relay device sends the indication information to the terminal device, and the terminal device can learn from the indication information that the relay device has performed the handover from the first cell to the second cell and has established the connection with the second cell. The solution of the embodiment of the present application enables the terminal device to learn the completion status of the cell handover of the relay device, thereby enabling the terminal device to interact with the second cell after the handover through the relay device.

FIG. 9 is a schematic structural diagram of a communication apparatus provided by an embodiment of the present application. The communication apparatus of this embodiment may be in the form of software and/or hardware. The apparatus may be a chip, or a chip module, etc. As shown in FIG. 9, the communication apparatus 90 includes a handover module 91 and a sending module 92, where:
the handover module 91 is configured to perform handover from a first cell to a second cell and establish a connection with the second cell, where a relay device maintains a connected state with the first cell before the connection with the second cell is established successfully;
the sending module 92 is configured to send indication information to a terminal device, where the indication information is used to indicate that the relay device establishes the connection with the second cell.

In a possible implementation, the handover module 91 is specifically configured to:
receive a handover command from the first cell;
perform the handover from the first cell to the second cell based on the handover command and establish the connection with the second cell.

In a possible implementation, the handover command includes an identifier of the second cell.

In a possible implementation, the handover command includes configuration information of the second cell.

In a possible implementation, the handover module 91 is further configured to, before performing the handover from the first cell to the second cell based on the handover command and establishing the connection with the second cell:
send the handover command to the terminal device;
receive a response to the handover command from the terminal device.

In a possible implementation, the sending module 92 is further configured to:
receive first data from the terminal device and send the first data to the second cell.

In a possible implementation, the sending module 92 is specifically further configured to:
after the relay device sends the indication information to the terminal device, receive the first data from the terminal device and send the first data to the second cell.

In a possible implementation, the sending module 92 is specifically further configured to:
receive the first data from the terminal device after the relay device receives the handover command from the first cell;
send the first data to the second cell after the relay device establishes the connection with the second cell.

In a possible implementation, the sending module 92 is further configured to:
receive second data from the terminal device and send the second data to the first cell.

The apparatus provided in the embodiment of the present application can be used to execute the technical solutions of the above method embodiments, and the implementation principles and technical effects thereof are similar and will not be repeated here.

FIG. 10 is a schematic structural diagram of a communication apparatus provided by an embodiment of the present application. The communication apparatus of this embodiment may be in the form of software and/or hardware. The apparatus may be a chip, or a chip module, etc. As shown in FIG. 10, the communication apparatus 100 includes a receiving module 101 and a processing module 102, where:
the receiving module 101 is configured to receive indication information from a relay device, where the indication information is used to indicate that the relay device performs handover from a first cell to a second cell and establishes a connection with the second cell;
the processing module 102 is configured to stop, based on the indication information, sending second data to the first cell through the relay device.

In a possible implementation, a sending module is further included, and the sending module is configured to:
send first data to the second cell through the relay device.

In a possible implementation, before receiving the indication information from the relay device, the receiving module 101 is further configured to:
receive a handover command from the relay device;
send a response to the handover command to the relay device.

In a possible implementation, the handover command includes an identifier of the second cell.

In a possible implementation, the handover command includes configuration information of the second cell.

In a possible implementation, the sending module is specifically configured to:
send the first data to the relay device after receiving the indication information from the relay device.

In a possible implementation, the sending module is specifically configured to:
send the first data to the relay device after receiving the handover command from the relay device.

The apparatus provided in the embodiment of the present application can be used to execute the technical solutions of the above method embodiments, and the implementation principles and technical effects thereof are similar and will not be repeated here.

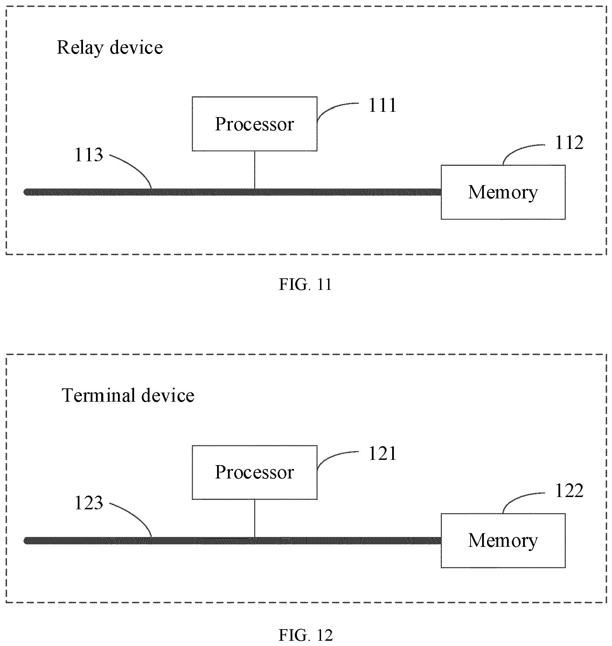

FIG. 11 is a schematic diagram of a hardware structure of a relay device provided by an embodiment of the present application. As shown in FIG. 11, the relay device includes: at least one processor 111 and a memory 112. The processor 111 and the memory 112 are connected via a bus 113.

Optionally, the model determination further includes a communication component. For example, the communication component may include a receiver and/or a transmitter.

In a specific implementation process, the at least one processor 111 executes computer-execution instructions stored in the memory 112 to cause the at least one processor 111 to perform the communication method as described above.

The specific implementation process of the processor 111 can be found in the method embodiments described above. The implementation principles and technical effects thereof are similar and will not be repeated here.

FIG. 12 is a schematic diagram of a hardware structure of a terminal device provided by an embodiment of the present application. As shown in FIG. 12, the terminal device includes: at least one processor 121 and a memory 122. The processor 121 and the memory 122 are connected via a bus 123.

Optionally, the model determination further includes a communication component. For example, the communication component may include a receiver and/or a transmitter.

In a specific implementation, the at least one processor 121 executes computer-execution instructions stored in the memory 122 to cause the at least one processor 121 to perform the communication method as described above.

The specific implementation process of the processor 121 can be found in the method embodiments described above. The implementation principles and technical effects thereof are similar and will not be repeated here.

In the embodiments shown in FIG. 11 or FIG. 12 above, it should be understood that the processor may be a Central Processing Unit (English: Central Processing Unit, abbreviated: CPU), and may also be other general-purpose processor, a Digital Signal Processor (English: Digital Signal Processor, abbreviated: DSP), an Application Specific Integrated Circuit (English: Application Specific Integrated Circuit, abbreviated: ASIC), etc. The general-purpose processor may be a microprocessor or the processor may be any conventional processor, etc. The steps of the method disclosed in the present application may be directly embodied as being executed and completed by a hardware processor, or may be executed and completed by a combination of hardware and software modules in the processor.

The memory may include a high-speed RAM memory or a non-volatile memory NVM, such as at least one disk memory.

The bus may be an Industry Standard Architecture (Industry Standard Architecture, ISA) bus, a Peripheral Component (Peripheral Component, PCI) bus, or an extended industry standard architecture (Extended Industry Standard Architecture, EISA) bus, etc. The bus can be divided into an address bus, a data bus, a control bus, etc. For the convenience of representation, the buses in the accompanying drawings of the present application are not limited to only one bus or one type of buses.

The present disclosure also provides a computer-readable storage medium, where the computer-readable storage medium stores computer-execution instructions, and the communication method as described above is implemented when a processor executes the computer-execution instructions.

The present disclosure also provides a computer program product including a computer program, where the communication method as described above is implemented when the computer program is executed by a processor.

As for the above computer-readable storage medium, the above readable storage medium may be realized by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk. The readable storage medium may be any available medium that can be accessed by a general-purpose or special-purpose computer.

An exemplary readable storage medium is coupled to a processor, so that the processor can read information from the readable storage medium and write information to the readable storage medium. Certainly, the readable storage medium may also be an integral part of the processor. The processor and the readable storage medium may be located in application-specific integrated circuits (Application Specific Integrated Circuits, abbreviated: ASICs). Certainly, the processor and the readable storage medium may also exist in a device as discrete components.

The division of the units is only a logical function division, and there may be other division modes in actual implementation. For example, multiple units or components may be combined or integrated into another system, or some features may be ignored or not executed. On another point, the mutual coupling or direct coupling or communication connection shown or discussed may be indirect coupling or communication connection through some interface, apparatuses or units, which may be in electrical, mechanical or other forms.

The units described as separate components may or may not be physically separated, and the components shown as units may or may not be physical units, that is, they may be located in one place or may be distributed to a plurality of network units. Some or all of the units may be selected according to actual needs to achieve the purpose of the solution of the embodiments.

In addition, the functional unit in the embodiments of the present application may be integrated into one processing unit, or each unit may exist alone physically, or two or more units may be integrated into one unit.

The functions described may be stored in a computer-readable storage medium if the functions are implemented in the form of software functional units and sold or used as an independent product. Based on this understanding, the essence of a technical solution of the present application, or the part that contributes to the prior art, or a part of the technical solution may be embodied in the form of a software product. The computer software product is stored in a storage medium and includes several instructions to cause a computer device (which may be a personal computer, a server, or a network device, etc.) to execute all or part of the steps of the methods described in various embodiments of the present application. The above storage medium includes: a USB drive, removable hard disk, a Read-Only Memory (ROM, Read-Only Memory), a Random Access Memory (RAM, Random Access Memory), a magnetic disk or an optical disk, or other media that can store program codes.

Those of ordinary skill in the art can understand that all or some of the steps to implement the above method embodiments can be completed by hardware related to program instructions. The above program may be stored in a computer-readable storage medium. The steps including the above method embodiments are executed when the program is executed. The above storage medium includes a ROM, a RAM, a magnetic disk or an optical disk, or other media that can store program codes.

Finally, it should be noted that the above embodiments are only used to explain the technical solutions of the present application, rather than limiting them. Although the present application has been described in detail with reference to the above embodiments, those skilled in the art should understand that the technical solutions recorded in the above embodiments can still be modified, or some or all of the technical features thereof can be replaced equivalently. These modifications or replacements do not make the essence of the corresponding technical solutions depart from the scope of the technical solutions of the embodiments of the present application.

## Claims

1. A communication method, comprising:
performing, by a relay device, handover from a first cell to a second cell and establishing a connection with the second cell, wherein the relay device maintains a connected state with the first cell before the connection with the second cell is established successfully;
sending, by the relay device, indication information to a terminal device, wherein the indication information is used to indicate that the relay device establishes the connection with the second cell.

2. The method according to claim 1, wherein performing, by the relay device, the handover from the first cell to the second cell and establishing the connection with the second cell comprises:
receiving, by the relay device, a handover command from the first cell;
performing, by the relay device, the handover from the first cell to the second cell based on the handover command and establishing the connection with the second cell.

3. The method according to claim 2, wherein the handover command comprises an identifier of the second cell.

4. The method according to claim 2 or 3, wherein the handover command comprises configuration information of the second cell.

5. The method according to claim 4, wherein before performing, by the relay device, the handover from the first cell to the second cell based on the handover command and establishing the connection with the second cell, the method further comprises:
sending, by the relay device, the handover command to the terminal device;
receiving, by the relay device, a response to the handover command from the terminal device.

6. The method according to claim 5, further comprising:
receiving, by the relay device, first data from the terminal device and sending the first data to the second cell.

7. The method according to claim 6, wherein receiving, by the relay device, the first data from the terminal device and sending the first data to the second cell comprises:
after the relay device sends the indication information to the terminal device, receiving, by the relay device, the first data from the terminal device and sending the first data to the second cell.

8. The method according to claim 6, wherein receiving, by the relay device, the first data from the terminal device and sending the first data to the second cell comprises:
receiving, by the relay device, the first data from the terminal device after the relay device receives the handover command from the first cell;
sending, by the relay device, the first data to the second cell after the relay device establishes the connection with the second cell.

9. The method according to any one of claims 1 to 8, wherein before the relay device establishes the connection with the second cell, the method further comprises:
receiving, by the relay device, second data from the terminal device and sending the second data to the first cell.

10. A communication method, comprising:
receiving, by a terminal device, indication information from a relay device, wherein the indication information is used to indicate that the relay device performs handover from a first cell to a second cell and establishes a connection with the second cell;
stopping, by the terminal device based on the indication information, sending second data to the first cell through the relay device.

11. The method according to claim 10, further comprising:
sending, by the terminal device, first data to the second cell through the relay device.

12. The method according to claim 11, wherein before receiving, by the terminal device, the indication information from the relay device, the method further comprises:
receiving, by the terminal device, a handover command from the relay device;
sending, by the terminal device, a response to the handover command to the relay device.

13. The method according to claim 12, wherein the handover command comprises an identifier of the second cell.

14. The method according to claim 12, wherein the handover command comprises configuration information of the second cell.

15. The method according to claim 14, wherein sending, by the terminal device, the first data to the second cell through the relay device comprises:
sending, by the terminal device, the first data to the relay device after receiving the indication information from the relay device.

16. The method according to claim 14, wherein sending, by the terminal device, the first data to the second cell through the relay device comprises:
sending, by the terminal device, the first data to the relay device after receiving the handover command from the relay device.

17. A communication apparatus, comprising:
a handover module, configured to perform handover from a first cell to a second cell and establish a connection with the second cell, wherein a relay device maintains a connected state with the first cell before the connection with the second cell is established successfully;
a sending module, configured to send indication information to a terminal device, wherein the indication information is used to indicate that the relay device establishes the connection with the second cell.

18. A communication apparatus, comprising:
a receiving module, configured to receive indication information from a relay device, wherein the indication information is used to indicate that the relay device performs handover from a first cell to a second cell and establishes a connection with the second cell;
a processing module, configured for a terminal device to stop, based on the indication information, sending second data to the first cell through the relay device.

19. A relay device, comprising: at least one processor and a memory;
wherein the memory stores computer-execution instructions;
the at least one processor executes the computer-execution instructions stored in the memory to cause the at least one processor to implement the communication method according to any one of claims 1 to 9.

20. A terminal device, comprising: at least one processor and a memory;
wherein the memory stores computer-execution instructions;
the at least one processor executes the computer-execution instructions stored in the memory to cause the at least one processor to implement the communication method according to any one of claims 10 to 16.

21. A computer-readable storage medium, wherein the computer-readable storage medium stores computer-execution instructions, and the communication method according to any one of claims 1 to 16 is implemented when a processor executes the computer-execution instructions.

22. A computer program product comprising a computer program, wherein the communication method according to any one of claims 1 to 16 is implemented when the computer program is executed by a processor.
